# EUROPEAN PATENT APPLICATION

(11) **EP 1 860 863 A1**
(43) Date of publication of application: **28.11.2007**
(21) Application number: 06731648.9
(22) Date of filing: 12.04.2006
(51) Int. Cl.: H04M 11/00, H04B 7/26, H04Q 7/34

(54) **INFORMATION PROCESSING DEVICE HAVING SECURITY FUNCTION**

(30) Priority: 25.04.2005 JP 2005126694
(71) Applicant: MATSUSHITA ELECTRIC INDUSTRIAL CO., LTD., Osaka 571-8501 (JP)
(72) Inventor: WADA, Masato Matsushita Electric Industrial Co Ltd., 2-1-61 Shiromi, Chuo-ku Osaka 540-6207 (JP)
(74) Representative: Gassner, Wolfgang
(86) International application number: PCT/JP2006/307701
(87) International publication number: WO 2006/115048

(57) **Abstract**

An access information storage section (106) stores access information in which an effective area, used for determining whether access to a portion of or all of data stored in a data storage section (107) is permitted/not permitted, is defined. A position information acquisition section (101) acquires position information about the current position from a position information providing terminal (300). When access to specific data having the access information occurs, an access determination process section (102) determines whether the current position about which the position information is acquired by the position information acquisition section (101) is within or outside the effective area defined for the specific data. A data management section (105) performs control by which the access to the specific data stored in the data storage section (107) is permitted when the access determination process section (102) determines that the current position is within the effective area, and by which the access to the specific data is denied when the access determination process section (102) determines that the current position is outside the effective area.

## Description

### TECHNICAL FIELD

The present invention relates to an information processing device having a security function, and to a portable information processing device having a security function for protecting information about stored data and the like based on position information, about the current position, acquired from a position information providing terminal such as a satellite terminal and a base station.

### BACKGROUND ART

As is well known, a portable information processing device such as a mobile phone and a PDA allows data stored therein to be carried freely and also to be accessed (browsed, watched, etc.) freely. However, due to the above-described freedom, data such as classifiedmaterial, which is prohibited from being removed from the premises, may be taken outside unnoticed via a mobile terminal.

A technique related to the above-described problem includes a technique disclosed in Patent Document 1 and a technique disclosed in Patent Document 2. The technique disclosed in Patent Document 1, which is directed to protecting copyrights and the like, associates digital information subject to a copyright and the like with position information in advance, so as to permit access to the digital information only within an area defined in the position information.

Further, the technique disclosed in Patent Document 2, which is directed to protecting information, associates a user and a group to which the user belongs with position information in advance, so as to permit the user to access only a device and the like present within a specific area defined in the position information.
Patent Document 1: Published Japanese Translation of a PCT Application No. 2004-528616
Patent Document 2: Japanese Laid-Open Patent Publication No. 2003-99400

### DISCLOSURE OF THE INVENTION

### PROBLEMS TO BE SOLVED BY THE INVENTION

However, the above-described technique disclosed in Patent Document 1, in which a plurality of pieces of copyrighted digital information as a whole are associated with a piece of position information, cannot protect the plurality of pieces of digital information in an individual manner.

Further, the above-described technique disclosed in Patent Document 2, in which the user who performs access is associated with the position information, allows the user to access all of data present within the specific area defined in the position information. Therefore, this technique cannot prevent the data from being copied into an information processing device within the specific area and then the information processing device from being taken outside the specific area.

Thus, objects of the present invention are to provide an information processing device having a security function for protecting information in an individual manner by associating each piece of the information stored in the information processing device with position information corresponding to a level of importance, a level of confidentiality, and the like.

### SOLUTION TO THE PROBLEMS

The present invention is directed to an information processing device capable of acquiring position information from a position information providing terminal. To achieve the above objects,theinformation processing device according to the present invention includes a data storage section, an access information storage section, a position information acquisition section, an access determination process section, and a data management section.

The data storage section stores data. The access information storage section stores access information in which an effective area, used for determining whether access to a portion of or all of the data stored in the data storage section is permitted/not permitted, is defined. The position information acquisition section acquires position information about the current position from the position information providing terminal. When access to specific data having the access information occurs, the access determination process section determines whether the current position about which the position information is acquired by the position information acquisition section is within or outside the effective area defined for the specific data. The data management section performs control by which the access to the specific data stored in the data storage section is denied when the access determination process section determines that the current position is outside the effective area.

The data management section may deny, by deleting the specific data stored in the data storage section, the access thereto, or may deny, by transferring the specific data to the external device via a data transfer process section which is further included in the information processing device so as to transfer data stored in the data storage section and by deleting the specific data stored in the data storage section, the access thereto.

Further, it is preferable that when access to the specific data transferred to the external device and deleted from the data storage section occurs and the access determination process section determines that the current position is within the effective area, the data management section acquires the specific data from the external device via the data transfer process section, causes the data storage section to store the specific data, and then permits the access thereto.
Typically, the effective area defined in the access information may be specified by a latitude and a longitude of its center and by its radius, or may be specified by a predetermined region.

A process performed by each component of the above-described information processing device can be viewed as an information processing method including a series of processing steps. This method is provided in the form of a program for causing a computer to execute the series of processing steps. The program may be, in a form of being recorded in a computer-readable recording medium, introduced into the computer. Further, the functional block of the access information storage section, the access determination process section, and the data management section, which is included in the above-described information processing device may be realized as an LSI, which is an integrated circuit.

### EFFECT OF THE INVENTION.

As described above, based on the present invention, it is determined, in accordance with an effective area, whether access is permitted/not permitted, and therefore a security function corresponding to a level of importance, a level of confidentiality, and the like can be realized. Further, data to which access is not permitted is transferred to a server, and therefore the data can be prevented from being lost. Furthermore, the data transferred to the server can be recovered by download even after deleted from the information processing device. Note that when a display screen indicates that data cannot be used due to deletion or transfer, the indications are provided in different manners so as to improve convenience.

### BRIEF DESCRIPTION OF THE DRAWINGS

[FIG. 1] FIG. 1 is a block diagram showing a structure of an information processing device 100 according to a first embodiment of the present invention.
[FIG. 2] FIG. 2 is a diagram showing an example and a hierarchical image of data stored in a data storage section 107.
[FIG. 3] FIG. 3 is a diagram showing an example of access information stored in an access information storage section 106.
[FIG. 4] FIG. 4 is a flow chart showing steps of a data access determination process performed by the information processing device 100 according to the first embodiment of the present invention.
[FIG. 5] FIG. 5 is a diagram showing examples of a display screen of a data access section 104 used in the first embodiment.
[FIG. 6A] FIG. 6A is a diagram illustrating a determination process performed in an access determination process section 102.
[FIG. 6B] FIG. 6B is a diagram illustrating a determination process performed in the access determination process section 102.
[FIG. 7] FIG. 7 is a sequence of the data access determination process performed by the information processing device 100.
[FIG. 8] FIG. 8 is a diagram showing an example of access information stored in the access information storage section 106.
[FIG. 9] FIG. 9 is a block diagram showing a structure of an information processing device 120 according to a second embodiment of the present invention.
[FIG. 10] FIG. 10 is a diagram showing an example of a system including a server 200.
[FIG. 11] FIG. 11 is a diagram showing an example of a detailed structure of the server 200.
[FIG. 12] FIG. 12 is a diagram showing an example of access information stored in an access information storage section 126.
[FIG. 13] FIG. 13 is a flow chart showing steps of a data access determination process performed by the information processing device 120 according to the second embodiment of the present invention.
[FIG. 14] FIG. 14 is a sequence of the data access determination process performed by the information processing device 120.
[FIG. 15] FIG. 15 is a block diagram showing a structure of an information processing device 130 according to a third embodiment of the present invention.
[FIG. 16] FIG. 16 is a flow chart showing steps of a data access determination process performed by the information processing device 130 according to the third embodiment of the present invention.
[FIG. 17] FIG. 17 is a diagram showing examples of a display screen of a data access section 104 used in the third embodiment.
[FIG. 18] FIG. 18 is a sequence of the data access determination process performed by the information processing device 130.

### DESCRIPTION OF THE REFERENCE CHARACTERS

- 100, 120, 130: information processing device
- 101: position information acquisition section
- 102: access determination process section
- 103: access information setting section
- 104: data access section
- 105, 125, 135, 203: data management section
- 106, 126: access information storage section
- 107, 204: data storage section
- 128: data transfer section
- 129, 139, 201: communication process section
- 138: data acquisition section
- 200: server
- 202: data transfer reception section
- 300: position information providing terminal
- 400: communication network

### BEST MODE FOR CARRYING OUT THE INVENTION

### (First Embodiment)

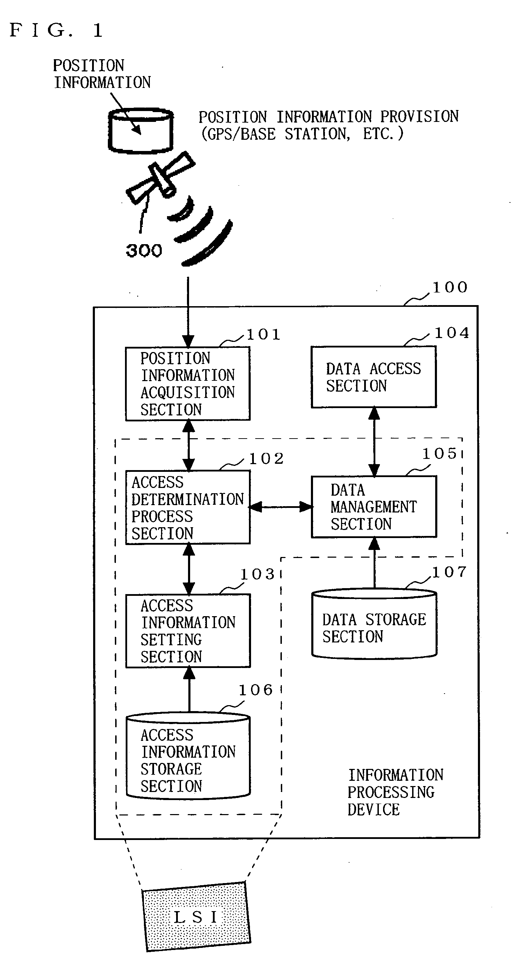

FIG. 1 is a block diagram showing a structure of an information processing device 100 according to a first embodiment of the present invention. In FIG. 1, the information processing device 100 according to the first embodiment includes a position information acquisition section 101, an access determination process section 102, an access information setting section 103, a data access section 104, a data management section 105, an access information storage section 106, and a data storage section 107.

First, a general description of each component of the information processing device 100 will be provided below.
The data access section 104, which is a user interface, receives a data access request from a user and outputs a response made to the request. The data access section 104 may be, for example, an application for displaying an image, an application for generating and displaying a document, an application for causing a ringtone melody to sound on reception, and an application for referring to a phone book.

In accordance with the data access request received from the data access section 104, the data management section 105 makes an inquiry to the access determination process section 102 about whether the access to the requested data (hereinafter, referred to as access requested data) is permitted/not permitted. Further, in accordance with an response, received from the access determination process section 102, about whether the access is permitted/not permitted, the data management section 105 performs a process such that the access requested data stored in the data storage section 107 is provided/not provided.

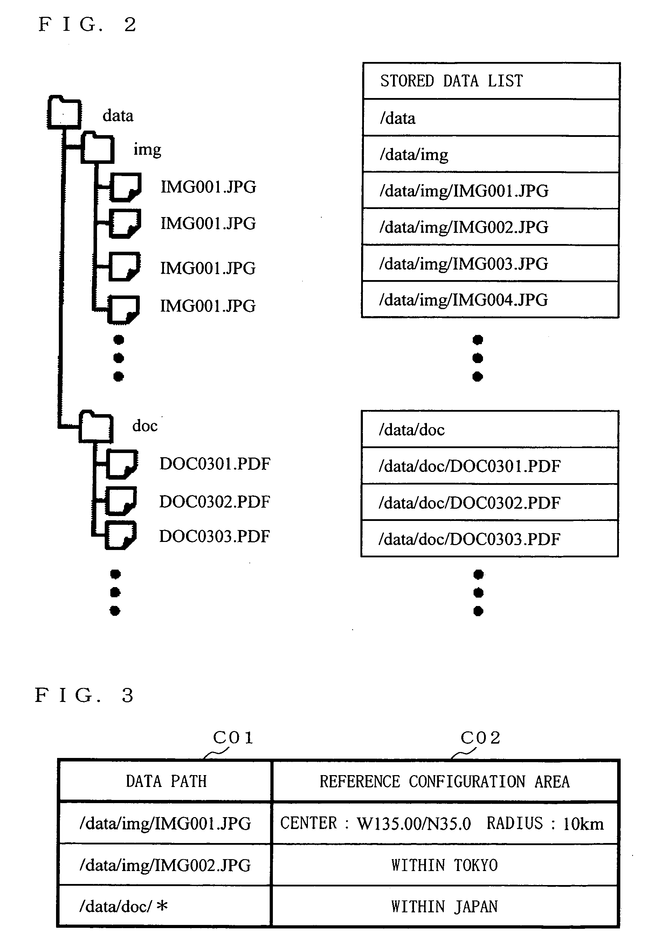

The data storage section 107 stores, in file formats, all of data included in the information processing device 100. The data stored in the data storage section 107 may include, for example, image data of photographs taken by the user, downloaded music data, data of phone numbers, e-mail addresses, addresses and the like, and data stored in external memory such as an SD Memory Card (registered trademark). FIG. 2 is a diagram showing an example and a hierarchical image of the data stored in the data storage section 107.

The access information storage section 106 stores, with respect to each data, access information used for determining whether access to a portion of or all of the data stored in the data storage section 107 is permitted/not permitted. FIG. 3 is a diagram showing an example of the access information stored in the access information storage section 106. As shown in FIG. 3, the access information includes a data path C01 and a reference configuration area C02. In the data path C01, a file name or a folder name of data to be subjected to access control is registered. In the reference configuration area C02, a condition on which access to data is restricted is set. The present invention uses position information as the condition.

In accordance with the inquiry, received from the data management section 105, about whether the access to the access requested data is permitted/not permitted, the access determination process section 102 gives the position information acquisition section 101 an instruction to acquire the position information about the current position of the information processing device 100 and also gives the access information setting section 103 an instruction to conduct a search for the access information about the access requested data. Then, based on the position information acquired by the position information acquisition section 101 and based on the access information for which the search has been conducted (including a case where the search may not be conducted) by the access information setting section 103, the access determination process section 102 determines whether the access to the access requested data is permitted/not permitted.

In accordance with the instruction given by the access determination process section 102, the position information acquisition section 101 acquires, based on information provided by a position information providing terminal 300 such as a satellite terminal and a base station, the position information about the current position of the information processing device 100. The position information may be, for example, latitude/longitude information provided by a GPS satellite terminal or predetermined regional information provided by a base station used for mobile phones.
Regarding the access information stored in the access information storage section 106, the access information setting section 103 sets/updates the access information by user operation, conducts a search for and performs read-out of the access information in accordance with an instruction given by the access determination process section 102, and the like.

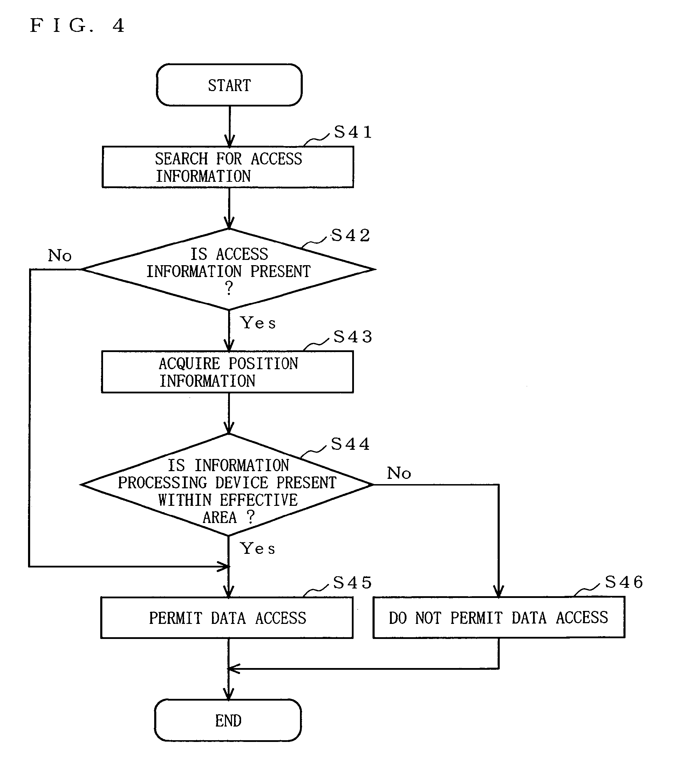

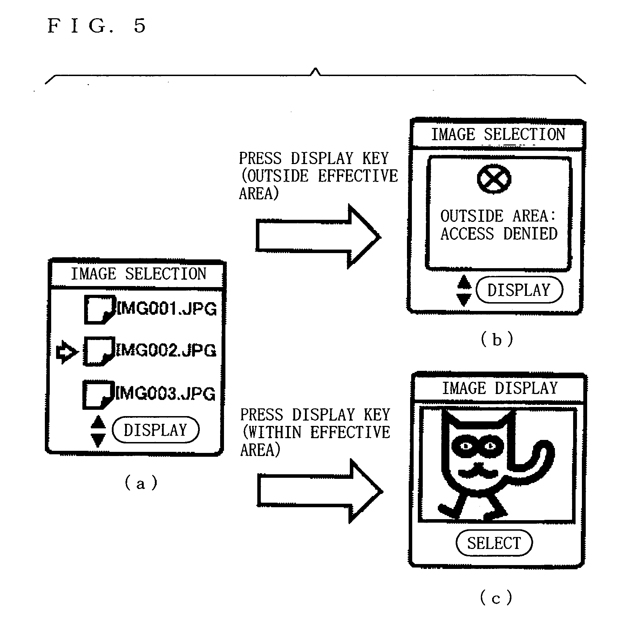

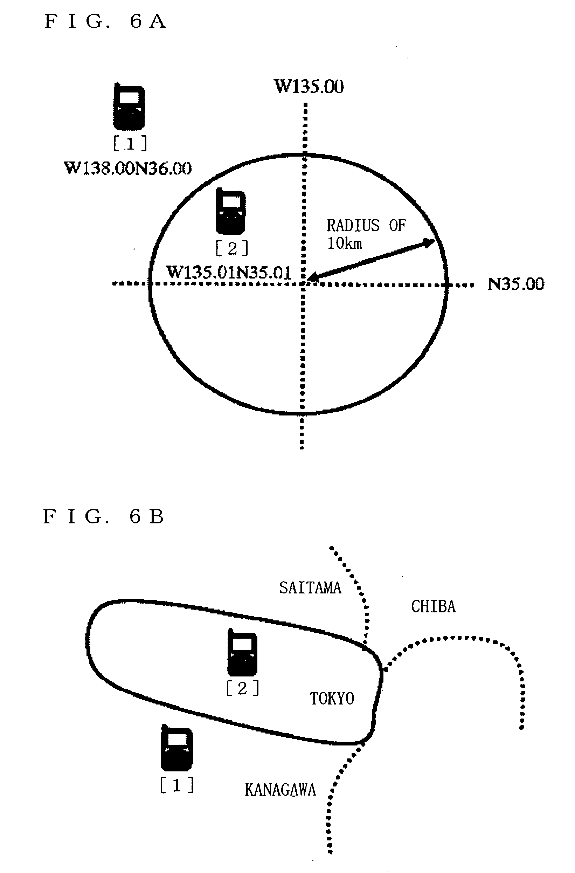

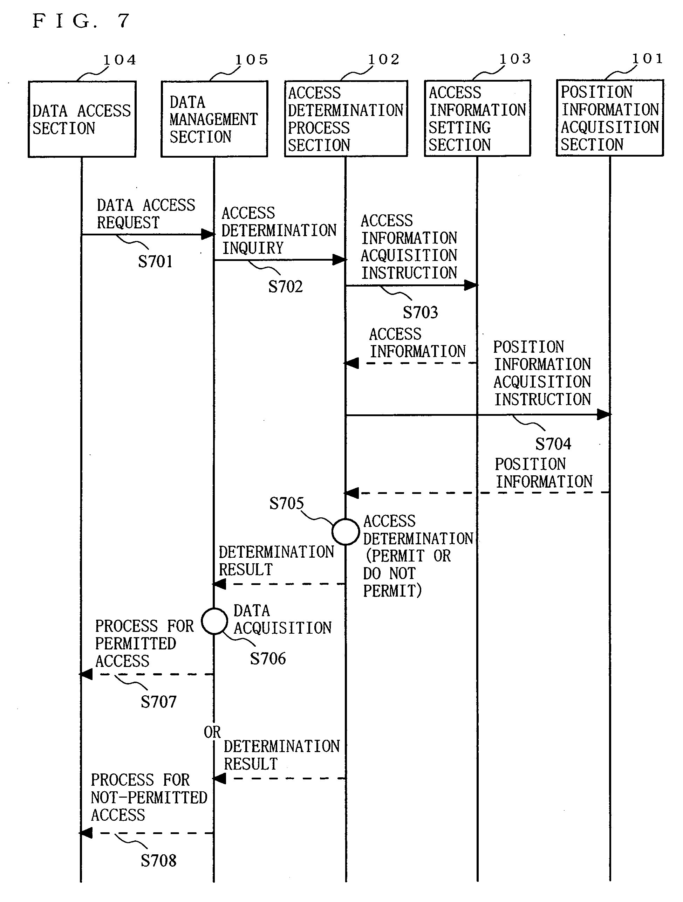

Next, access control performed by the information processing device 100 having the above structure will be described. FIG. 4 is a flow chart showing steps of a data access determination process performed by the information processing device 100 according to the first embodiment of the present invention. FIG. 5 is a diagram showing examples of a display screen of the data access section 104 used in the first embodiment. FIGS. 6 are diagrams each illustrating a determination process performed in the access determination process section 102. FIG. 7 is a sequence of the data access determination process performed by the information processing device 100.

The data access determination process is started by the data access section 104 receiving a data access request from a user. The data for which the data access request is to be made may be selected, for example, through a screen shown in (a) of FIG. 5. FIG. 5 shows an example where a list of data stored under a directory "/data/img/" of FIG. 2 is displayed on the screen. When the data access request is received, the access determination process section 102 gives the access information setting section 103 an instruction to conduct a search for the access information about the access requested data to which the access is requested (step S41). When, as a result of the search, the access information about the access requested data is present (step S42, "Yes"), the access determination process section 102 gives the position information acquisition section 101 an instruction to acquire the position information about the current position of the information processing device 100 (step S43).

When the position information is acquired, the access determination process section 102 determines whether or not the current position about which the position information is acquired is present within an effective area registered as the reference configuration area C02 included in the access information (step S44). For example, data in which the data path C01 = "/data/img/IMG001.JPG" as shown in FIG. 3 is determined based on whether or not the information processing device 100 is, as shown in FIG. 6A, included within a circular area having a radius of 10 kilometers and having its center at latitude 35 north and longitude 135 west. Therefore, in FIG. 6A, it is determined that a mobile phone [1] is present outside the effective area and a mobile phone [2] is present within the effective area. Further, data in which the data path C01 = "/data/img/IMG002.JPG" as shown in FIG. 3 is determined based on whether or not the information processing device 100 is, as shown in FIG. 6B, included within the Tokyo region (the determination can be made by using radio waves from base stations installed throughout Tokyo). Therefore, in FIG. 6B, it is determined that a mobile phone [1] is present outside the effective area and a mobile phone [2] is present within the effective area.

When it is determined that the information processing device 100 is not present within the effective area (step S44, "No"), the access determination process section 102 determines that the access to the access requested data is not permitted (step S46). In response to the determination that the access is not permitted, the data management section 105 notifies the data access section 104 that the access to the access requested data is denied.
In this case, a display screen image of the data access section 104 may be, for example, (b) of FIG. 5.
On the other hand, when it is determined that the information processing device 100 is present within the effective area (step S44, "Yes"), the access determination process section 102 determines that the access to the access requested data is permitted (step S45). Note that when, as a result of the search conducted in the above step S41, the access information about the access requested data is not present (step S42, "No"), it is also determined that the access to the access requested data is permitted (step S45). In response to the determination that the access is permitted, the data management section 105 reads the access requested data from the data storage section 107 so as to provide the data access section 104 with the access requested data. In this case, a display screen image of the data access section 104 may be, for example, (c) of FIG. 5.

FIG. 7 is a sequence showing the above-described process. In FIG. 7, the data access section 104 notifies the data management section 105 of a data access request received from a user (S701). The data management section 105 makes an inquiry to the access determination process section 102 about whether or not the access to the access requested data is permitted (S702). The access determination process section 102 acquires the access information about the access requested data from the access information setting section 103 (S703). Additionally, the access determination process section 102 acquires the position information from the position information acquisition section 101 (S704). Then, based on the access information and the position information which have been acquired, the access determination process section 102 determines whether the access is permitted/not permitted (S705). The data management section 105 is notified of the access determination result. When the access to the data is permitted, the access requested data is read from the data storage section so as to be provided to the data access section 104 (S706, 5707). When the access to the data is not permitted, a process is performed such that the access to the data is not permitted (S708).

Note that a unit in which a data access request is made by a user may be a minimum data unit or may be a folder unit including a plurality of data. In the latter case, in the sequence of S701, the data access section 104 notifies the data management section 105 of a folder access request. Then, in the sequence of S702, the data management section 105 makes an inquiry to the access determination process section 102 about whether or not the access to all of data included in the folder (hereinafter, referred to as an access requested folder) requested by the folder access request is permitted. In response, the access determination process section 102 repeats the sequence of S703 through S705 for all of the data included in the access requested folder, so as to determine whether the access to each data is permitted/not permitted. Provision to the data access section 104 based on the above determination is made in such a manner that the access requested folder may not be accessed when at least one not-permitted data is included therein, or that only permitted data may be accessed by indicating only the permitted data or by indicating the permitted data and the not-permitted data in different manners (○ × indications, a shading difference, a color difference, etc.).

As described above, based on the information processing device 100 according to the first embodiment of the present invention, access control is performed for stored data in an individual manner by associating a file and a folder thereof to be protected with position information special for each file and each folder. Thus, a security function corresponding to a level of importance, a level of confidentiality, and the like can be realized.

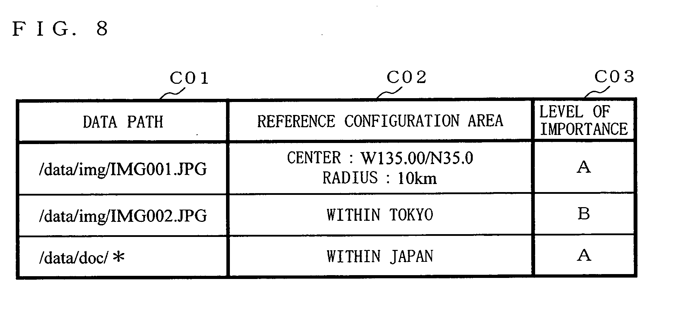

Note that in the first embodiment, described is an example where control is performed such that access requested data is left in the information processing device 100 when it is determined that the access thereto is not permitted. However, control may be performed such that access requested data is deleted from the information processing device 100 when the access thereto is not permitted.
Further, for example, control may be performed such that the access information in which files and folders each have a level of importance C03 is registered in advance as shown in FIG. 8, so as to delete data having the highest level of importance C03 (e.g. , the level of importance A) from the information processing device 100 and so as to deny, by leaving data having the second-highest level of importance (e.g., the level of importance B) in the information processing device 100, only access thereto.

### (Second Embodiment)

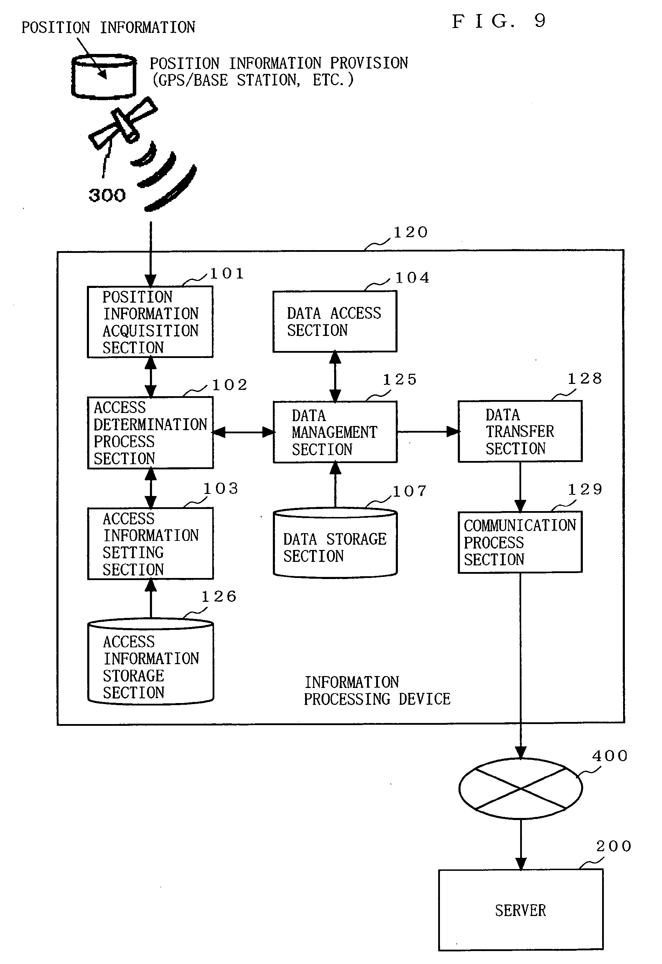

FIG. 9 is a block diagram showing a structure of an information processing device 120 according to a second embodiment of the present invention. In FIG. 9, the information processing device 120 according to the second embodiment includes a position information acquisition section 101, an access determination process section 102, an access information setting section 103, a data access section 104, a data management section 125, an access information storage section 126, a data storage section 107, a data transfer section 128, and a communication process section 129. The data transfer section 128 and the communication process section 129 are included in a data transfer process section.

As shown in FIG. 9, the information processing device 120 according to the second embodiment is different from the information processing device 100 according to the first embodiment in that the information processing device 120 includes the data management section 125, the access information storage section 126, the data transfer section 128, and the communication process section 129. The other components are common to the first embodiment and the second embodiment, and therefore are denoted by the same reference numerals. The information processing device 120, especially the above different components, according to the second embodiment will be described below.

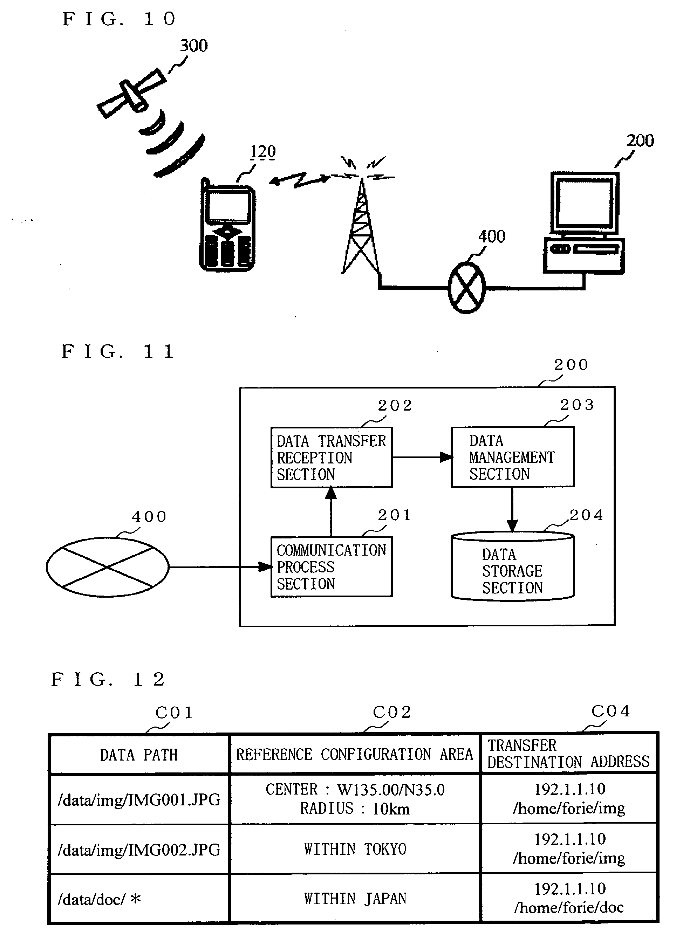

By using the most recently described structure, the information processing device 120 according to the second embodiment performs communication via a communication network 400 so as to transfer (upload) access requested data to a server 200, when the access thereto is not permitted. FIG. 10 shows an example of a system including the server 200. Note that typically the server 200, which may have an ordinary structure, includes a communication process section (a LAN port and a modem used in a PC) 201 for performing data communication with another device via the communication network 400, a data transfer reception section 202 for receiving the access requested data transferred via the communication process section 201, and a data management section 203 for storing, into a data storage section 204, the transferred access requested data (FIG. 11).

The access information storage section 126 stores access information used for determining whether access to a portion of or all of data stored in the data storage section 107 is permitted/not permitted. FIG. 12 is a diagram showing an example of the access information stored in the access information storage section 126. The access information shown in FIG. 12 includes a transfer destination address C04 in addition to the data path C01 and the reference configuration area C02 as shown in FIG. 3. In the transfer destination address C04, address information for, when a data access request is made outside the effective area, specifying a destination to which the access requested data is to be transferred, is registered.

In accordance with the data access request received from the data access section 104, the data management section 125 makes an inquiry to the access determination process section 102 about whether the access to the access requested data is permitted/not permitted. Further, in accordance with a response, received from the access determination process section 102, about whether the access is permitted/not permitted, the data management section 125 performs a process such that the access requested data stored in the data storage section 107 is provided/not provided and also performs a process such that the access requested data is transferred/not transferred.

In accordance with the process for the access requested data, provided by the data management section 125, to be transferred, the data transfer section 128 transfers the data via the communication process section 129 and the communication network 400. The communication process section 129 used herein may be, for example, a communication modem or a communication card used in a mobile phone for performing communication with the communication network 400.

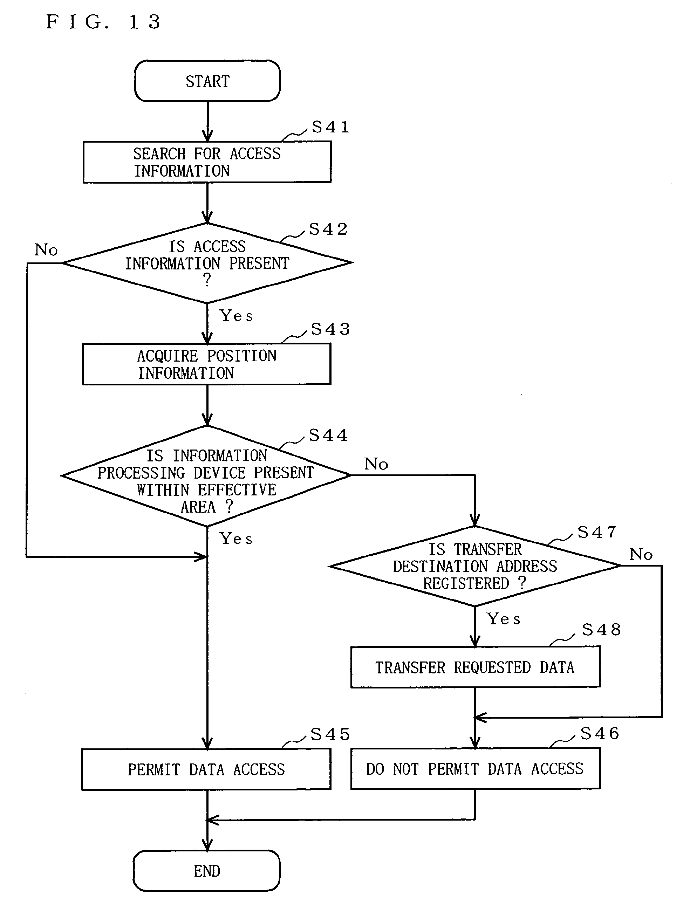

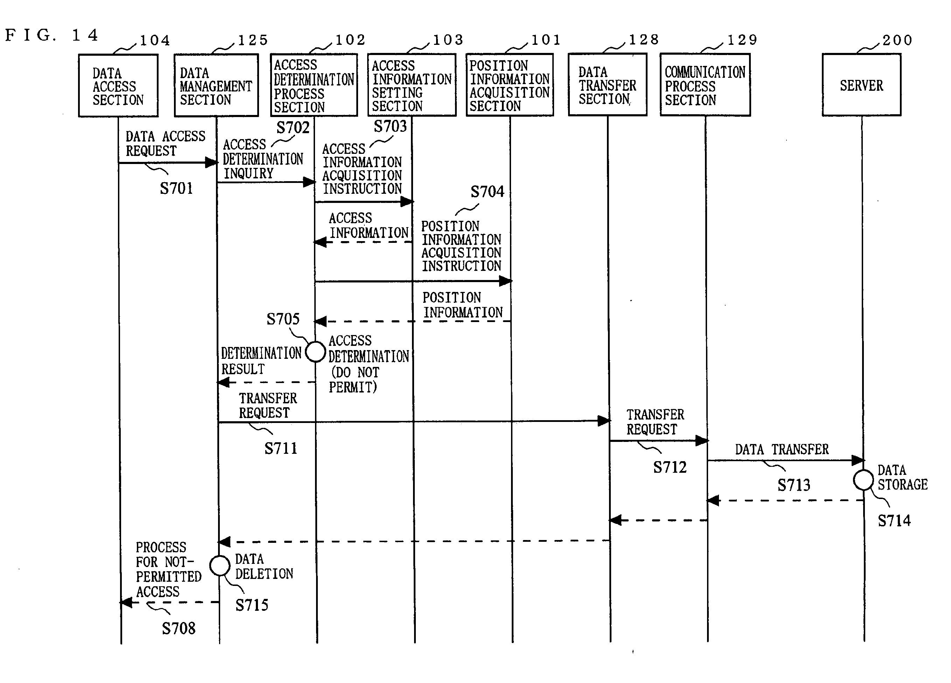

Next, access control performed by the information processing device 120 having the above structure will be described. FIG. 13 is a flow chart showing steps of a data access determination process performed by the information processing device 120 according to the second embodiment of the present invention. FIG. 14 is a sequence of the data access determination process performed by the information processing device 120.

Steps S41 through S44 of the data access determination process are the same as those shown in FIG. 4. When it is determined that the information processing device 120 is not present within the effective area (step S44, "No"), the access determination process section 102 determines whether or not the transfer destination address C04 is registered in the access information about the access requested data (step S47). Then, when the transfer destination address C04 is registered, the access determination process section 102 transfers the access requested data to the registered address by controlling the data transfer section 128 and the communication process section 129 (step S48). Then, the access determination process section 102 determines that the access to the access requested data is not permitted (step S46). In response to the determination that the access is not permitted, the data management section 105 notifies the data access section 104 that the access to the access requested data is denied.

FIG. 14 is a sequence showing the above-described process. The sequence (S701 through S705) fromwhen the data access section 104 receives a data access request from a user to when it is determined whether the access is permitted/not permitted, is the same as that shown in FIG. 7.
When the access is not permitted, the data management section 105 gives the data transfer section 128 an instruction to transfer the access requested data (S711) . The data transfer section 128, which is given the instruction to transfer the data, makes a transfer request to the communication process section 129 (S712). In accordance with the transfer request, the communication process section 129 transfers the access requested data to the server 200 via the communication network 400 (S713). The server 200 stores the transferred access requested data (S714). In this case, it is preferable that the server 200 stores the stored data in association with a transmission source address and the like, so as to determine from which of the information processing devices 120 the stored data is transferred. In response to a response, received from the server 200, indicating the storage completion (the transfer completion), the data management section 125 deletes the transferred access requested data from the data storage section 107 (S715) and performs a process such that the access to the data is not permitted (S708).

As described above, based on the information processing device 120 according to the second embodiment of the present invention, in addition to the above-described process of the first embodiment, access requested data to which the access is not permitted is transferred to a predetermined address. Thus, a security function corresponding to a level of importance, a level of confidentiality, and the like can be realized, and also, data can be prevented from being lost.
Note that in the second embodiment, described is an example where access requested data is transferred and then is deleted. However, the access requested data may not be deleted such that only the access thereto cannot be permitted.

### (Third Embodiment)

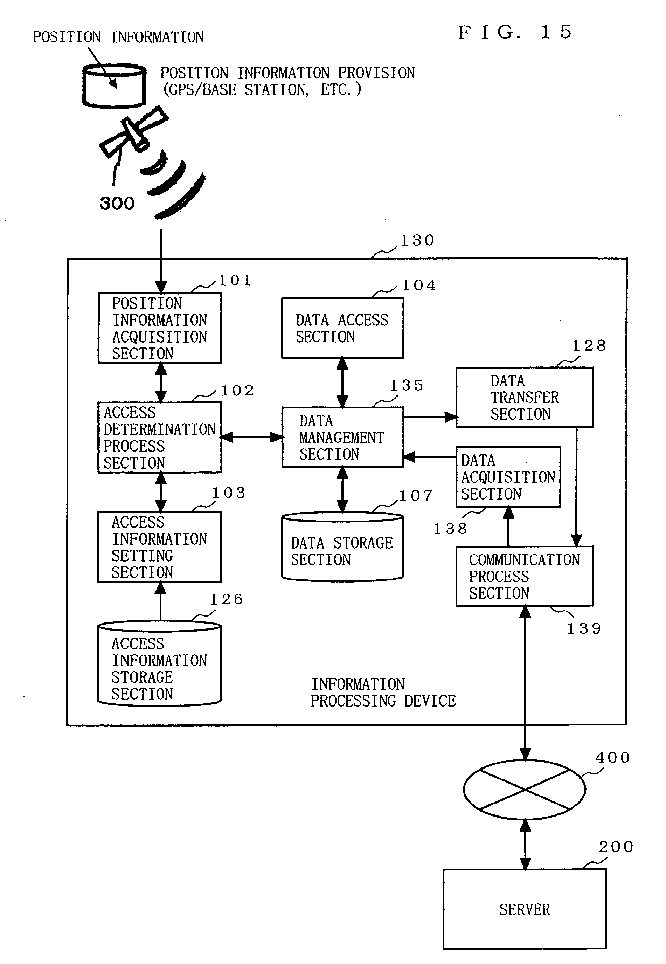

FIG. 15 is a block diagram showing a structure of an information processing device 130 according to a third embodiment of the present invention. In FIG. 15, the information processing device 130 according to the third embodiment includes a position information acquisition section 101, an access determination process section 102, an access information setting section 103, a data access section 104, a data management section 135, an access information storage section 126, a data storage section 107, a data transfer section 128, a data acquisition section 138, and a communication process section 139.

As shown in FIG. 15, the information processing device 130 according to the third embodiment is different from the information processing device 120 according to the second embodiment in that the information processing device 130 includes the data management section 135, the data acquisition section 138, and the communication process section 139. The other components are common to the first embodiment, the second embodiment, and the third embodiment, and therefore are denoted by the same reference numerals. The information processing device 130, especially the above different components, according to the third embodiment will be described below.

When a user makes an access request for data which is no longer present due to being deleted after transferred to a server 200, the information processing device 130 according to the third embodiment acquires (downloads), by using the most recently described structure, the access requested data from the server 200. An example of a system including the server 200 and an example of a detailed structure of the server 200 are the same as those shown in FIGS. 10 and 11, respectively.

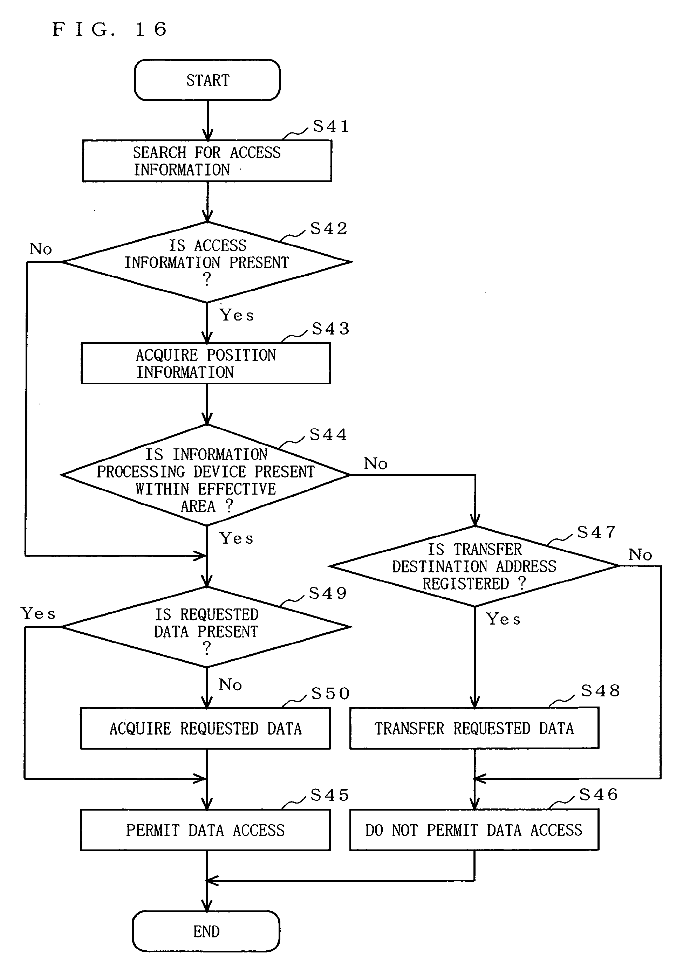

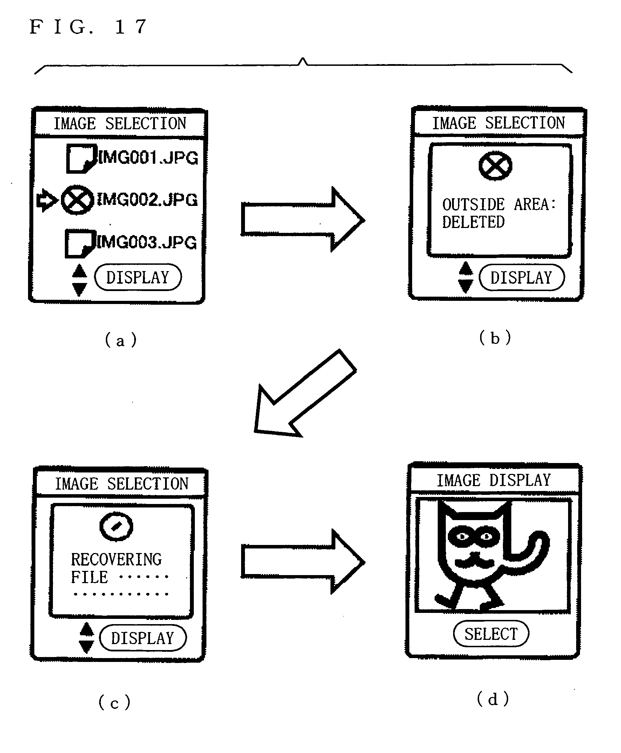

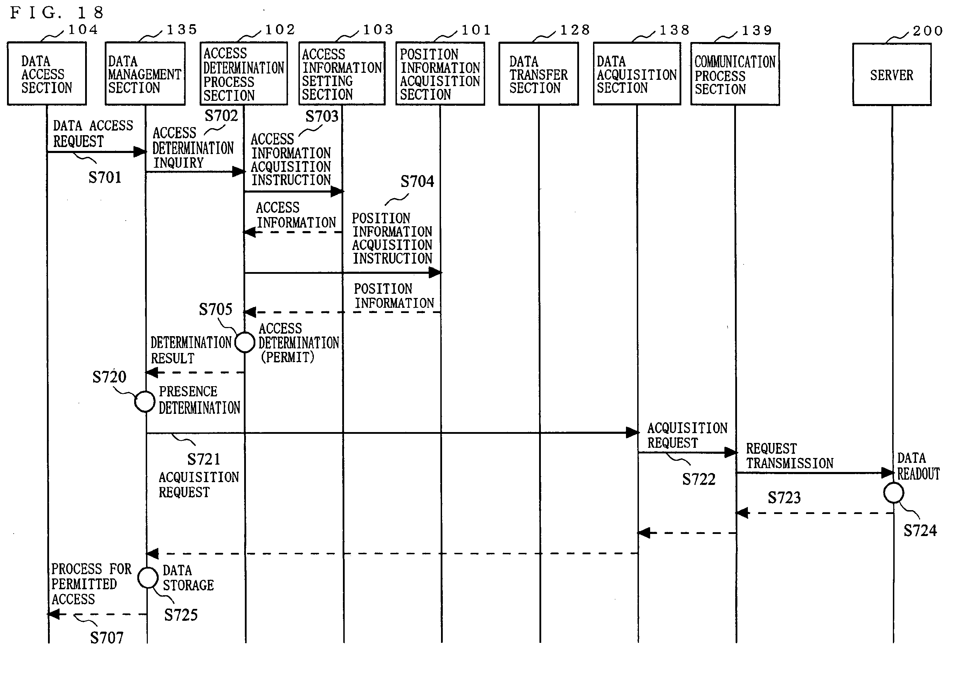

FIG. 16 is a flow chart showing steps of a data access determination process performed by the information processing device 130 according to the third embodiment of the present invention. FIG. 17 is a diagram showing examples of a display screen of the data access section 104 used in the third embodiment. FIG. 18 is a sequence of the data access determination process performed by the information processing device 130.

The premise is that data deleted after transferred to the server 200 as described in the second embodiment is no longer present but a file list index thereof is left in the data storage section 107. Therefore, as shown in (a) of FIG. 17, the deleted data is also indicated in a data list presented to a user by the data access section 104. Note that existing data and deleted data may be distinguished by means of indications of special icons or shading/colors of characters.

When the user selects the deleted data, steps S41 through S44 of the data access determination process are the same as those shown in FIG. 4. When it is determined that the information processing device 130 is present within the effective area (step S44, "Yes"), the access determination process section 102 determines whether or not access requested data, which is the selected data, is present in the data storage section 107 (step S49). When the access requested data is present in the data storage section 107, the access determination process section 102 determines that the access to the access requested data is permitted (step S45). In response to the determination that the access is permitted, the data management section 105 reads the access requested data from the data storage section 107 so as to provide the data access section 104 with the access requested data. In this case, a display screen image of the data access section 104 may be, for example, (d) of FIG. 17.

On the other hand, when the access requested data is not present in the data storage section 107, the access determination process section 102 acquires the access requested data from the server 200 by controlling the data transfer section 128 and the communication process section 129 (step S50). While the access requested data is being acquired, screen display such as (b) and (c) of FIG. 17 may be presented to the user through the data access section 104. The data storage section 107 stores the acquired access requested data. Then, the access determination process section 102 determines that the access to the access requested data is permitted (step S45). In response to the determination that the access is permitted, the data management section 105 reads the access requested data from the data storage section 107 so as to provide the data access section 104 with the access requested data.

FIG. 18 is a sequence showing the above-described process. The sequence (S701 through S705) fromwhenthedataaccess section 104 receives a data access request from a user to when it is determined whether the access is permitted/not permitted, is the same as that shown in FIG. 8.
When the access is permitted, the data management section 105 determines whether or not the access requested data is stored in the data storage section 107 (S720). When the access requested data is not stored therein, the data management section 135 gives the data transfer section 128 an instruction to acquire the data (S721). The data acquisition section 138, which is given the instruction to acquire the data, makes an acquisition request to the communication process section 139 (S722). In accordance with the acquisition request, the communication process section 139 transmits the acquisition request to the server 200 via the communication network 400 (S723). In accordance with the transmitted acquisition request, the server 200 reads the access requested data stored therein so as to transmit the access requested data based on an transmission source address and the like stored in association therewith (5724). Then, when the access requested data transmitted from the server 200 is received, the data management section 135 stores the received access requested data into the data storage section 107 (S725) and performs a process such that the access to the access requested data is permitted (S707).

As described above, based on the information processing device 130 according to the third embodiment of the present invention, in addition to the above-described processes of the first and second embodiments, when another access request is made for data transferred, for protection, to another device, the data is downloaded from said another device to which the data has been transferred. Thus, data once deleted can be recovered.

Note that in the first through third embodiments, described is a case where the data access section 104 receiving a data access request from a user is a trigger for starting a data access determination process. However, the information processing device may voluntarily perform a data access determination process without receiving a data access request. In this case, a trigger may be a time when the position information is periodically acquired, or may be a time when the information processing device enters or exits from a predetermined area (the reference configuration area C02 of the access information, etc.).

Note that the above-described embodiments can be realized by causing a CPU to execute predetermined program data, which is capable of causing a CPU to execute the above-described processing steps, stored in a storage device (a ROM, a RAM, or a hard disk, etc.). In this case, the program data may be introduced into the storage device via a recording medium, or may be directly executed from the recordingmedium. Note that the recording medium includes a semiconductor memory such as a ROM, a RAM, and a flash memory, a magnetic disk memory such as a flexible disk and a hard disk, an optical disk memory such as a CD-ROM, a DVD, and a BD, a memory card, or the like. The "recording medium" as used herein is a concept including a communication medium such as a telephone line and a carrier line.

Note that the functional block (dashed portion of FIG. 1) of the access determination process sections 102 and 122, the access information setting section 103, the data management sections 105, 125 and 135, the access information storage sections 106 and 126, which are included in the information processing device according to the present invention may typically be realized as an LSI, which is an integrated circuit (which may be referred to as an IC, a system LSI, a super LSI, or an ultra LSI, etc., depending on the degree of integration) . Each of the functional blocks may be separately constructed in a chip form, or all or some of the functional blocks may be constructed in a chip form.
Further, the method of integration is not limited to LSI, and may be realized by a dedicated circuit or a general-purpose processor. Also, an FPGA (Field Programmable Gate Array), which is an LSI that can be programmed after manufacture, or a reconfigurable processor enabling connections and settings of the circuit cells in the LSI to be reconfigured may be used.
Furthermore, in a case where another integration technology replacing LSI becomes available due to improvement of a semiconductor technology or due to the emergence of another technology derived therefrom,integration of the functional blocks may be performed using such a technology. For example, biotechnology may be applied to the above-described integration.

### INDUSTRIAL APPLICABILITY

The present invention is applicable to a portable information processing device such as a mobile phone and a PDA, which is capable of acquiring position information about the current position from a position information providing terminal such as a satellite terminal and a base station, and is particularly suitable for a case where information is to be protected in an individual manner in accordance with a level of importance, a level of confidentiality, and the like.

## Claims

1. An information processing device capable of acquiring position information from a position information providing terminal, the information processing device comprising:
a data storage section for storing data;
an access information storage section for storing access information in which an effective area, used for determining whether access to a portion of or all of the data stored in the data storage section is permitted/not permitted, is defined;
a position information acquisition section for acquiring position information about a current position from the position information providing terminal;
an access determination process section for, when access to specific data having the access information occurs, determining whether the current position about which the position information is acquired by the position information acquisition section is within or outside the effective area defined for the specific data; and
a data management section for performing control by which the access to the specific data stored in the data storage section is denied when the access determination process section determines that the current position is outside the effective area.

2. The information processing device according to claim 1, wherein the data management section denies, by deleting the specific data stored in the data storage section, the access thereto.

3. The information processing device according to claim 1, further comprising a data transfer process section for transferring the data stored in the data storage section to an external device, wherein
the data management section denies, by transferring the specific data to the external device via the data transfer process section and by deleting the specific data stored in the data storage section, the access thereto.

4. The information processing device according to claim 3, further comprising a data acquisition section for acquiring the data from the external device, wherein,
when access to the specific data transferred to the external device and deleted from the data storage section occurs and the access determination process section determines that the current position is within the effective area,
the data management section acquires the specific data from the external device via the data acquisition section, causes the data storage section to store the specific data, and then permits the access thereto.

5. The information processing device according to claim 3, further comprising a data acquisition section for acquiring the data from the external device, wherein,
when the access determination process section determines that the current position returns to within an arbitrary effective area defined in the access information,
the data management section acquires, from the external device via the data acquisition section, the specific data for which the arbitrary effective area is defined and which is transferred to the external device and deleted from the data storage section, and causes the data storage section to store the specific data.

6. The information processing device according to claim 3, wherein the data management section performs control for the specific data in different manners in accordance with a level of importance or a level of confidentiality thereof.

7. The information processing device according to claim 1, wherein the effective area defined in the access information is specified by a latitude and a longitude of its center and by its radius.

8. The information processing device according to claim 1, wherein the effective area defined in the access information is specified by a predetermined region.

9. An information processing method performed by using position information acquired from a position information providing terminal, the information processing method comprising:
a step of registering access information in which an effective area, used for determining whether access to a portion of or all of data stored in a data storage section is permitted/not permitted, is defined;
a step of identifying that access to specific data having the access information occurs;
a step of acquiring, in accordance with the access occurring, position information about a current position from the position information providing terminal;
a step of determining whether the current position about which the position information is acquired in the acquiring step is within or outside the effective area defined for the specific data; and
a step of denying the access to the specific data stored in the data storage section when the determining step determines that the current position is outside the effective area.

10. A program for causing an information processing device to execute an information processing method performed by using position information acquired from a position information providing terminal, the program being for causing the information processing device to execute:
a step of registering access information in which an effective area, used for determining whether access to a portion of or all of data stored in a data storage section is permitted/not permitted, is defined;
a step of identifying that access to specific data having the access information occurs;
a step of acquiring, in accordance with the access occurring, position information about a current position from the position information providing terminal;
a step of determining whether the current position about which the position information is acquired in the acquiring step is within or outside the effective area defined for the specific data; and
a step of denying the access to the specific data stored in the data storage section when the determining step determines that the current position is outside the effective area.

11. An integrated circuit used in an information processing device capable of acquiring position information from a position information providing terminal,
the integrated circuit being incorporated in an information processing device including a data storage section for storing data and a position information acquisition section for acquiring position information about a current position from the position information providing terminal, and
the integrated circuit having a circuit integrated therein to function as:
an access information storage section for storing access information in which an effective area, used for determining whether access to a portion of or all of the data stored in the data storage section is permitted/not permitted, is defined;
an access determination process section for, when access to specific data having the access information occurs, determining whether the current position about which the position information is acquired by the position information acquisition section is within or outside the effective area defined for the specific data; and
a data management section for performing control by which the access to the specific data stored in the data storage section is denied when the access determination process section determines that the current position is outside the effective area.
